# FASCICULE DE BREVET EUROPEEN

(11) **EP 1 168 551 B1**
(45) Date de publication et mention de la délivrance du brevet: **11.06.2008**
(21) Numéro de dépôt: 01401615.8
(22) Date de dépôt: 19.06.2001
(51) Int. Cl.: H02B 5/00

(54) **Poste haute tension hybride à jeu de barres sous enveloppe métallique et phase de secours à isolation dans l'air**
Hybrid-Hochspannungsstation mit metallgekapselter Sammelschienenanordnung und luftisolierter Notstromversorgung
Hybrid high voltage switchyard with metal enclosed busbars and air insulated emergency phase

(30) Priorité: 23.06.2000 FR 0008120
(43) Date de publication de la demande: 02.01.2002
(73) Titulaire: AREVA T&D SA, 92084 Paris La Defense Cedex (FR)
(72) Inventeur: Marmonier, Jean, 34130 Saint Aunis (FR); Audren, Jean-Paul, 73100 Saint Offenge Dessus (FR)
(74) Mandataire: Poulin, Gérard

(56) Documents cités:
- DE-A- 3 530 644

## Description

L'invention a pour objet un poste haute tension hybride, à jeu de barres et sectionneurs en technologie sous enveloppe métallique et isolation au gaz, et le reste des équipements en technologie à isolation dans l'air dite conventionnelle. Plus particulièrement, l'invention porte sur une amélioration de ce type de poste, consistant à ajouter une phase de secours en technologie conventionnelle pour permettre de réduire considérablement le temps d'indisponibilité du poste en cas d'intervention sur un jeu de barres. Il convient de préciser que l'abréviation GIS (gas insulated system) est communément utilisée pour désigner la technologie à isolation au gaz sous enveloppe métallique appliqué aux appareillages dit blindés, et que l'abréviation AIS (air insulated system) désigne la technologie à isolation dans l'air.

En préambule, le concept de poste haute tension hybride mérite d'être approfondi car relativement récent. Le but principal recherché est la réduction de la surface au sol des postes conventionnels AIS, tout en conservant à la fois les avantages de la technologie AIS en terme de coût et de facilité de remplacement d'un composant et les avantages de la technologie GIS en terme d'encombrement et de comportement vis à vis de la pollution.

Pour rappel, les inconvénients de la technologie GIS par rapport à l'AIS sont principalement des coûts plus élevés, et une complexité de la maintenance et des extensions pouvant conduire à une indisponibilité pendant une durée allant jusqu'à quelques jours. En contrepartie, les avantages de la technologie GIS par rapport à l'AIS sont principalement un encombrement réduit et une insensibilité à la pollution, notamment au niveau des jeux de barres. De plus, un nettoyage des isolateurs d'un poste GIS nécessite généralement une coupure uniquement travée par travée, alors que le nettoyage des isolateurs des jeux de barres d'un poste AIS nécessite la coupure de tous les jeux de barres.

La réalisation d'un poste hybride consiste à remplacer progressivement des équipements de technologie GIS par des équipements de technologie AIS de fonction équivalente, en partant des équipements situés du coté d'un départ aérien pour se rapprocher du jeu de barres. La configuration optimale répondant aux objectifs précités consiste à équiper ce poste avec d'une part un jeu de barres et des sectionneurs sous enveloppe métallique (GIS), et d'autre part le reste des équipements en technologie conventionnelle AIS.

Cette solution technique procure la plupart des avantages de l'appareillage sous enveloppe métallique et de l'appareillage isolé dans l'air, sans en avoir les inconvénients respectifs.

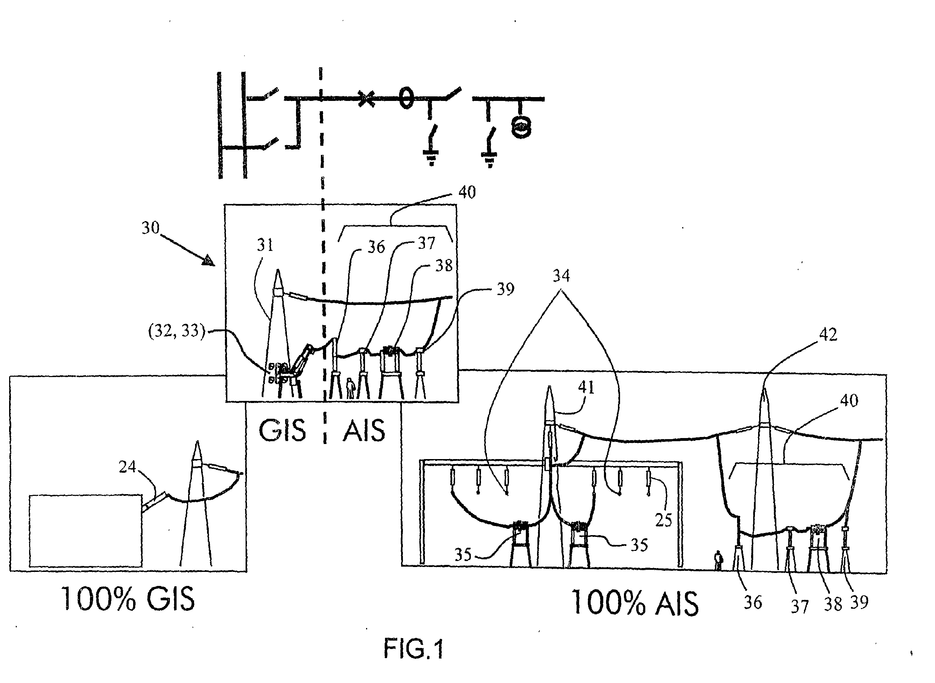

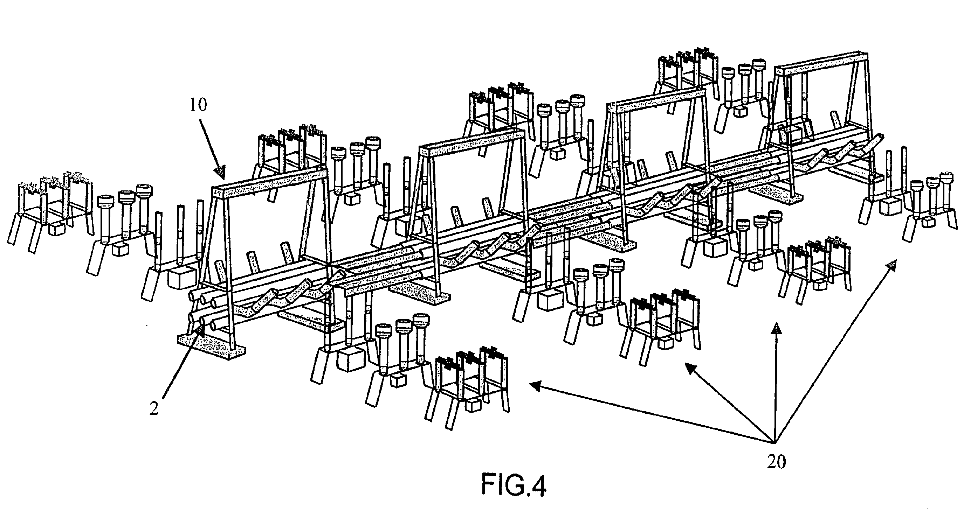

Afin d'optimiser la surface au sol, la demanderesse a conçu une architecture permettant de loger le jeu de barres sous un portique central pouvant servir de portique d'arrêt de ligne pour les départs d'un même côté du portique. L'intérêt de cette architecture par rapport à un ensemble conventionnel de technologie entièrement AIS apparaît à la figure 1, où on peut constater la suppression du portique d'arrêt de ligne classique devenu inutile dans un dispositif hybride GIS/AIS. Une disposition avec des départs directement opposés, particulièrement avantageuse en terme d'occupation du sol, a en outre été conçu par la demanderesse et est représentée à la figure 4.

Pourtant, de tels dispositifs hybrides GIS/AIS présentent des inconvénients par rapport aux dispositifs conventionnels de technologie entièrement AIS. En particulier, en cas de maintenance sur un double jeu de barres blindé, il est souvent nécessaire de mettre hors tension deux barres affectées à une même phase, ce qui conduit à une indisponibilité du poste pendant en moyenne trois à quatre jours étant donné la complexité des interventions sur des équipement de technologie GIS. Il y a tout d'abord des interventions où une mise hors tension de deux barres de même phase est indispensable, en particulier en cas de maintenance d'un sectionneur d'aiguillage de ces deux barres. Pendant l'intervention, il est en effet nécessaire de vider le gaz isolant des compartiments du sectionneur et de la traversée. Il y a ensuite des interventions où il n'est pas absolument indispensable de mettre simultanément hors tension les deux barres d'une même phase, comme dans le cas d'une extension d'un jeu de barres où de nouveaux compartiments blindés sont successivement ajoutés dans le prolongement de compartiments existants. Les barres à prolonger peuvent être coupées (mises hors tension) une seule à la fois par les sectionneurs d'aiguillage, ce qui permet de maintenir le poste en service pendant l'intervention. Pourtant, dans ce type d'intervention, une opération de coupure complète des deux barres est souvent préférée à la mise hors tension d'une seule barre, par souci d'un maximum de sécurité.

Ainsi, une intervention sur un jeu de barres blindé dans un poste hybride se traduira le plus souvent par la coupure de deux barres d'une même phase, ce qui conduit à une indisponibilité de l'ensemble du poste.

Le document DE-A1-3530644 décrit un poste haute tension du genre mentionné ci-dessus.

Un but de l'invention est de réduire considérablement le temps d'indisponibilité d'un poste hybride lors d'une intervention sur un équipement sous enveloppe métallique.

A cet effet, l'invention a pour objet un poste haute tension hybride comprenant des équipements en technologie sous enveloppe métallique constitués au moins d'un jeu de barres (2) simple ou double, comprenant des équipements en technologie conventionnelle à isolation dans l'air agencés pour former des départs disposés en travées approximativement perpendiculaires audit jeu de barres, caractérisé en ce qu'il intègre au moins une ligne de secours à isolation dans l'air, approximativement parallèle au jeu de barres et assurant une fonction de phase de secours pour un fonctionnement dit dégradé du poste.

Dans un mode préféré de réalisation, chaque ligne de secours peut remplacer l'une quelconque des phases du jeu de barres en cas d'intervention sur un élément sous enveloppe métallique du poste.

Dans un mode préféré de réalisation, chaque ligne de secours est hors tension lorsque aucune intervention n'est en cours sur un élément sous enveloppe métallique du poste.

Dans un mode préféré de réalisation, chaque ligne de secours comporte des éléments de connexion chacun affecté à une phase du départ qu'il surplombe et pouvant chacun être raccordé à cette phase par un élément de liaison électrique.

Dans un mode préféré de réalisation, une seule une ligne de secours est installée de chaque côté du jeu de barres. En effet, étant donné qu'un incident dans la partie sous enveloppe métallique d'un poste ne concerne généralement qu'une seule phase (les trois phases sont transportées chacune dans des volumes indépendants), la ligne de secours peut n'être constituée que d'une seule phase, ce qui en réduit considérablement le coût et l'encombrement.

L'invention, ses caractéristiques et ses avantages sont précisés dans la description qui suit en rapport avec les figures ci dessous.

La figure 1 représente une configuration avantageuse d'un poste hybride AIS/GIS conçu par la demanderesse, en comparaison avec une configuration entièrement GIS et une configuration conventionnelle entièrement AIS.

Les figures 2 et 3 représentent les effets du passage progressif d'une technologie 100% GIS à une technologie 100% AIS, en termes d'occupation du sol figure 2 et de nombre de coupure en maintenance figure 3.

La figure 4 est une représentation en perspective d'une disposition de poste hybride à double jeu de barres triphasé conçu par la demanderesse, avec des départs directement opposés.

La figure 5 est une coupe d'une phase d'un départ triphasé pour un poste hybride selon l'invention comprenant une barre assurant la fonction de phase de secours.

La figure 6 est une représentation en perspective d'un départ triphasé d'un poste hybride comprenant une phase de secours telle que décrite à la figure 5.

La figure 7 est une représentation analogue à celle de la figure 5, où la connexion à la phase de secours se fait par un sectionneur à bras pivotant.

La figure 8 est une représentation partielle en perspective d'un départ triphasé d'un poste hybride selon l'invention, avec une vue surdimensionnée du double jeu de barres blindé.

La figure 9 est une représentation partielle en coupe d'une phase d'un poste hybride tel que représenté à la figure 8.

Figure 1, le poste hybride 30 (GIS/AIS) est équipé avec un double jeu de barres 32 triphasé et des sectionneurs d'aiguillage 33 sous enveloppe métallique, lesdits sectionneurs n'étant pas visibles sur la figure car disposés entre les deux jeux de barres. Chaque jeu de trois barres blindées est disposé horizontalement sous un portique d'arrêt de ligne 31. Le reste des équipements forme un départ 40 proprement dit et est réalisé en technologie conventionnelle AIS. Dans un tel départ, les équipements AIS comprennent typiquement en série un disjoncteur 36, un transformateur de courant 37, un sectionneur de mise à la terre de ligne 38, et un transformateur de tension 39. Le poste 100% AIS comprend un double jeu de barres 34 triphasé, constitué d'une paire de jeux de trois barres à isolation dans l'air disposés de part et d'autre d'un portique 41. Deux sectionneurs d'aiguillage 35 sont utilisés par phase pour un départ 40, lequel est ici surmonté d'un portique d'arrêt de ligne classique 42.

Il apparaît nettement que pour une configuration conventionnelle entièrement AIS, l'emprise au sol du double jeu de barres 34 est supérieure à celle d'un départ 40.

Le schéma figurant sur la partie supérieure de la figure est une représentation symbolique du circuit équivalent à une installation complète de poste. Sont représentés de gauche à droite les symboles pour un double jeu de barres avec sectionneurs d'aiguillage, un disjoncteur, un transformateur de courant, un sectionneur de mise à la terre de ligne et un transformateur de tension.

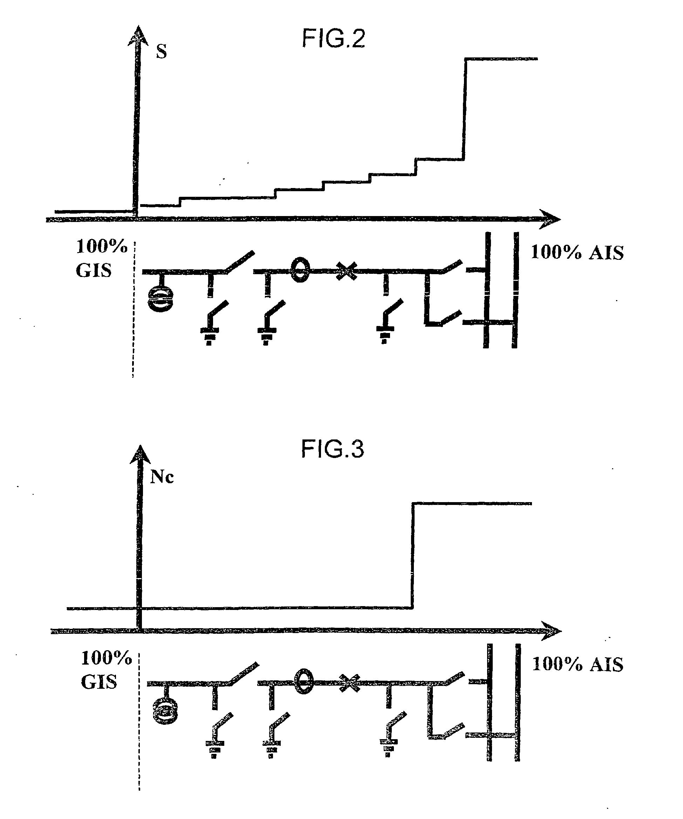

Sur la figure 2 est représentée en ordonnées l'évolution de la surface S au sol du poste, en passant progressivement d'un poste 100% GIS à un poste 100% AIS par remplacement successif des éléments suivants dont les symboles sont représentés au bas du graphe: transformateur de potentiel, double sectionneur de mise à la terre, transformateur de courant, disjoncteur, sectionneur de mise à la terre, double jeu de barres avec sectionneurs d'aiguillage. Il est ici vérifié ce qui peut être observé sur la figure 1, à savoir que l'emprise au sol du poste augmente fortement lorsque les sectionneurs d'aiguillage passent en technologie conventionnelle AIS.

Sur la figure 3 est représentée en ordonnées l'évolution du nombre Nc de coupures nécessaires lors du nettoyage des isolateurs d'un poste, en passant progressivement d'un poste 100% GIS à un poste 100% AIS de même que décrit à la figure 2. Nc est représentatif de la perte de continuité de service du ou des jeux de barres lors du nettoyage des isolateurs. Les interventions de nettoyage des isolateurs de traversées aériennes 24 sur des équipements GIS ne nécessitent pas la mise hors tension d'un jeu de barres, contrairement aux équipements AIS où il est nécessaire de couper les jeux de barres 34 pour intervenir sur des isolateurs 25 (les éléments 24 et 25 sont représentés à la figure 1). Une forte augmentation du nombre de coupures est donc inévitable lorsque les jeux de barres 32 et les sectionneurs d'aiguillage 33 passent en technologie conventionnelle AIS.

Ces graphes justifient le choix adopté pour la configuration avantageuse d'un poste hybride 30 tel que représenté figure 1.

Figure 4, les départs sont directement opposés et disposés en travées 20 perpendiculaires au jeu de barres 2. Une telle disposition à départs opposés est particulièrement avantageuse en terme d'occupation du sol puisque le portique central 10 assurant la fonction de portique d'arrêt peut être mis en commun pour les deux départs. La longueur d'un tel poste est divisée par deux par rapport à un poste en technologie conventionnelle AIS du fait que les départs peuvent être réalisés directement opposés. On peut remarquer l'aspect modulaire de ce type de poste, les modules élémentaires comportant ici chacun deux départs opposés. Il va de soi que d'autres dispositions peuvent être réalisées à partir de ce principe modulaire, par exemple une disposition où chaque module élémentaire ne comporte qu'un départ et où tous les départs sont du même côté du jeu de barres.

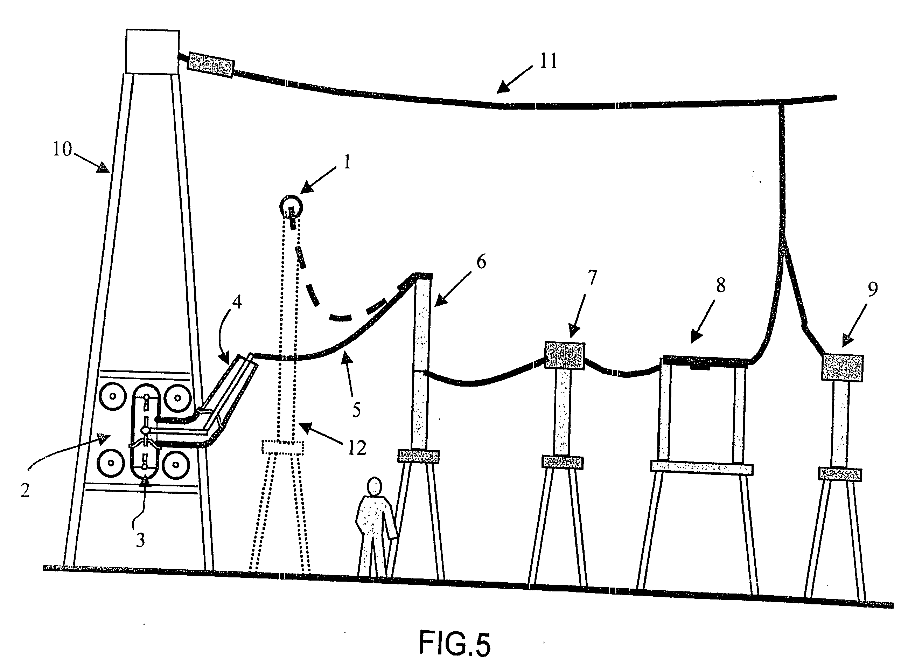

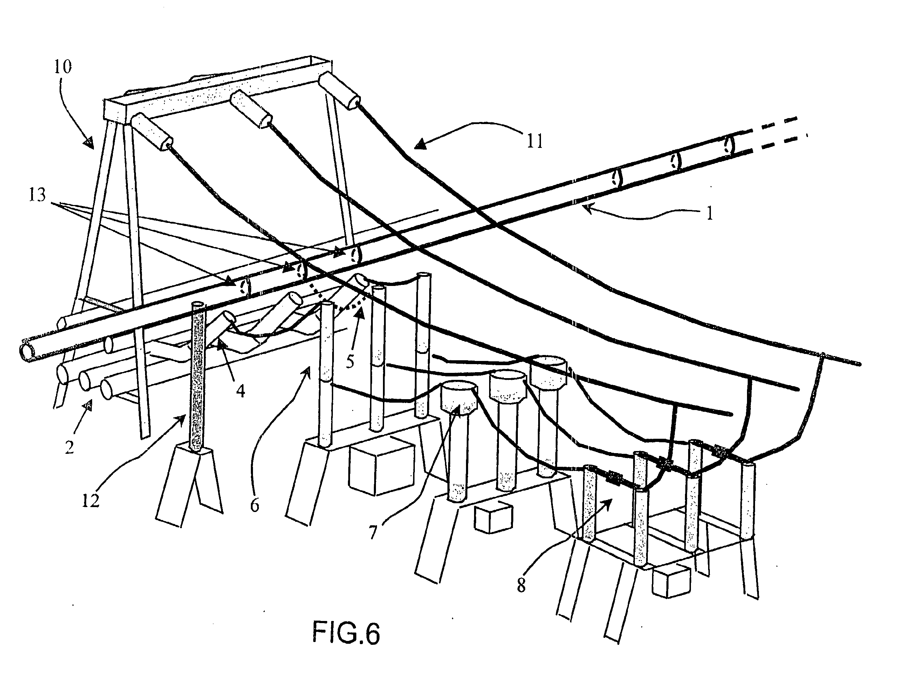

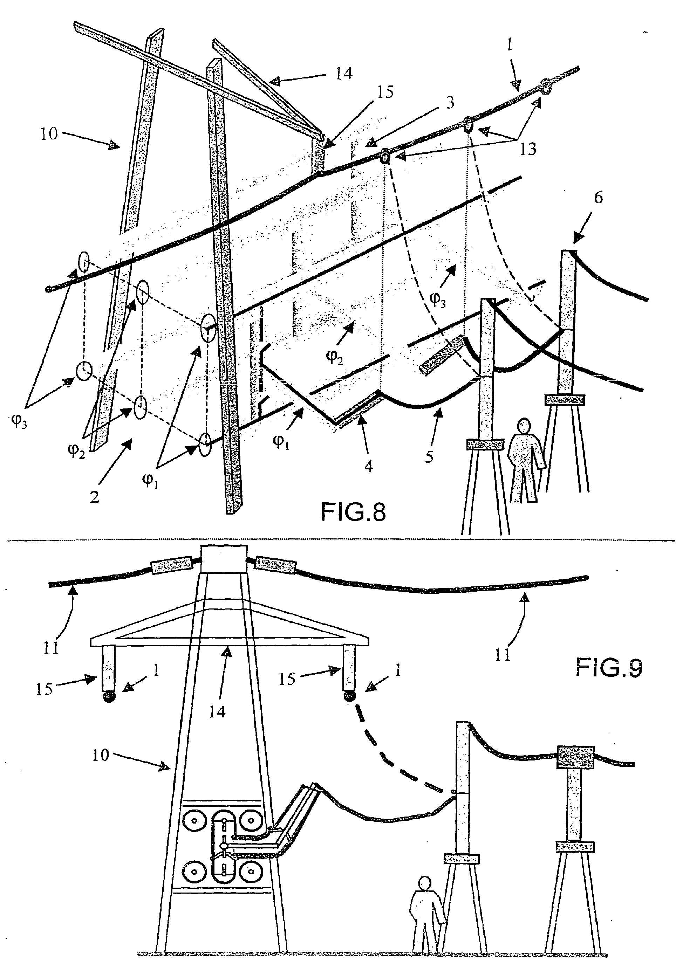

Figure 5, une ligne de secours 1, constituée de barres ou de câbles en technologie conventionnelle AIS, est installée dans le poste. Une seule ligne 1 est présente par départ dans le mode de réalisation représenté. Cette ligne est positionnée sensiblement parallèle au jeu de barres 2 de technologie GIS. Un seul départ est représenté, mais il est entendu que le poste hybride peut avoir des départs opposés tels que représentés à la figure 4. Le poste comprend par départ une barre unique 1, pouvant assurer une fonction de phase de secours en cas de coupure de l'une quelconque des phases du jeu de barres 2, pour un fonctionnement dit dégradé. Un tel fonctionnement dégradé permet la réparation du jeu de barres ou d'une de ses traversées aériennes 4, ou permet son extension, en réduisant considérablement pour chaque intervention le temps d'indisponibilité par rapport à un poste hybride dépourvu de phase de secours. Un portique d'arrêt 10 permet l'ancrage des câbles 11 de départ de ligne et est avantageusement utilisé pour supporter un double jeu de barres triphasé 2. Les compartiments de deux barres affectées à une même phase sont reliés entre eux de façon classique par des sectionneurs d'aiguillage 3 débouchant chacun sur une traversée aérienne 4. Une vue en perspective d'un schéma électrique du double jeu de barres 2 est par ailleurs représentée figure 8. Chaque traversée aérienne 4 correspond à une phase donnée et est reliée aux éléments de technologie AIS de même phase par un élément de liaison électrique 5 pouvant être un simple câble. Dans l'exemple représenté, cet élément de liaison est fixé en permanence à un disjoncteur 6 associé en série avec un transformateur de courant 7 et un sectionneur de mise à la terre de ligne 8. Un transformateur de tension 9 peut en outre être relié au potentiel du câble 11 alimenté par le départ. La barre 1 est ici supportée par une colonne isolante 12 et placée à une distance d'isolation suffisante du câble 11 et du portique 10. En période de fonctionnement normal du poste, la traversée aérienne 4 est reliée au disjoncteur 6 par l'élément de liaison 5 et la barre 1 est préférablement hors tension. Si une intervention est nécessaire sur un ou deux compartiments de même phase que la présente coupe dans le jeu de barres, l'élément de liaison 5 est déconnecté de la traversée aérienne 4 pour être connecté à la barre 1 par un élément de connexion 13 représenté figure 6, ceci pour cette même phase dans tous les départs du poste. Lesdits compartiments sont de préférence coupés avant la déconnexion pour raisons de sécurité, mais une déconnexion sous tension reste possible. La barre 1 est ensuite mise sous tension depuis un autre poste, à la même phase que la phase coupée dans le poste déficient, ce qui permet de faire fonctionner ce poste en mode dégradé après un temps d'indisponibilité typiquement de l'ordre d'une heure seulement. Un tel fonctionnement dégradé doit être assuré pendant toute la durée de l'intervention sur la partie du poste sous enveloppe métallique, typiquement de l'ordre de trois à quatre jours. Lorsque la phase coupée au niveau du jeu de barres est remise sous tension après l'intervention, le poste peut être rétabli en mode de fonctionnement normal en reconnectant travée par travée l'élément de liaison 5 à la traversée aérienne 4. La barre 1 peut alors être déconnectée de son alimentation. Pendant l'intervention, le fonctionnement est dit en mode dégradé car il n'offre pas la même sécurité de continuité de fourniture qu'en mode de fonctionnement normal. En particulier, lorsqu'une seule ligne de secours 1 est installée par départ, un éventuel défaut d'isolement survenant sur cette ligne 1 conduira à la coupure de tous les départs, que le poste comporte un simple ou un double jeu de barres. L'invention n'est cependant pas limitée à une seule phase de secours et plusieurs lignes de secours (barres ou câbles) peuvent être installées par départ, pour permettre d'une part un fonctionnement dégradé lors d'une intervention simultanée sur plusieurs phases du jeu de barres, et d'autre part une sécurité maximale en cas de dysfonctionnement sur une des lignes de secours. La demanderesse considère néanmoins à la date de la demande qu'une seule ligne de secours est préférable dans la plupart des cas pour des raisons d'encombrement et de coût, compte tenu aussi du fait statistique qu'un fonctionnement en mode dégradé selon l'invention sera à priori très rarement nécessaire, sans doute moins d'une fois par an par poste.

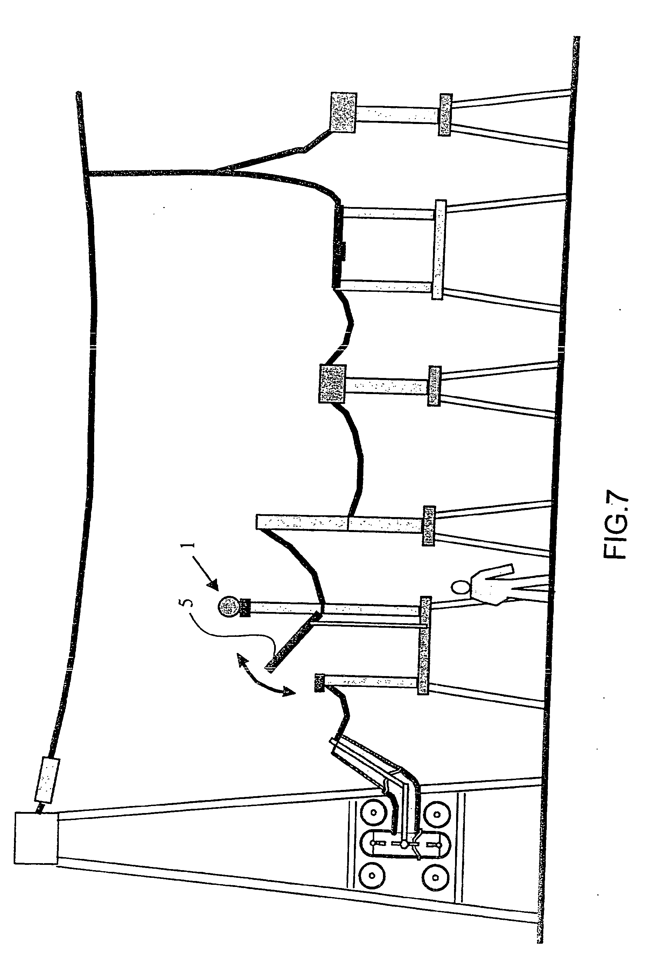

Figure 6, la phase du milieu de cette vue en perspective est identique à celle représentée en coupe à la figure 5. La barre 1 est représentée avec un diamètre surdimensionné pour faire apparaître les trois éléments de connexion 13 du départ fixés à cette barre mentionnés précédemment. Lorsque un élément de liaison 5, par exemple celui représenté en pointillés pour la phase du milieu, est connecté pour tous les départs du poste à la barre 1, le poste peut fonctionner en mode dégradé. Figure 7, l'élément de connexion 5 est constitué par le bras pivotant d'un sectionneur à commande unipolaire électrique ou à manivelle, ce qui permet de réduire le temps d'indisponibilité avant le passage du poste en mode de fonctionnement dégradé.

Figure 8 , le double jeu de barres 2 est ici schématiquement représenté avec les barres très espacées entre elles, à une échelle dysproportionnée par rapport au portique 10 et aux disjoncteurs 6. Cette représentation permet de comprendre l'agencement typique des sectionneurs d'aiguillage 3 affectés aux trois phases ϕ₁, ϕ₂ et ϕ₃, qui ne sont ici représentés que pour les départs d'un même côté du jeu de barres. Un schéma électrique des conducteurs internes des barres, du sectionneur d'aiguillage représenté en position de double ouverture et de la traversée aérienne 4, est représenté pour la phase ϕ₁.

Dans un mode de réalisation préféré, les sectionneurs d'aiguillage sont doublés de façon classique pour alimenter des départs opposés, et la ligne de secours 1 est constituée d'un câble suspendu à une potence 14 sur chaque portique 10 par l'intermédiaire d'un isolateur 15. Cette disposition permet de réduire les coûts et l'encombrement au sol par rapport à une réalisation équivalente représentée à la figure 5, puisqu'il n'est pas nécessaire d'installer un système de support avec son châssis au sol. De même que représenté à la figure 6, les éléments de connexion 13 fixés sur la ligne 1 sont préférablement situés chacun dans un plan vertical comprenant l'élément de liaison 5 qui lui est affecté.

La figure 9 est une représentation partielle en coupe de la phase ϕ₂ du départ de poste représenté à la figure 8. Le départ situé à gauche du jeu de barres n'est pas représenté car sensiblement symétrique à celui de droite par rapport au portique 10.

## Revendications

1. Poste haute tension comprenant des équipements en technologie sous enveloppe métallique constitués au moins d'un jeu de barres (2) simple ou double, comprenant des équipements en technologie conventionnelle à isolation dans l'air agencés pour former des départs disposés en travées (20) approximativement perpendiculaires audit jeu de barres, **caractérisé en ce qu**'il intègre au moins une ligne de secours (1) à isolation dans l'air, approximativement parallèle au jeu de barres et assurant une fonction de phase de secours pour un fonctionnement dit dégradé du poste.

2. Poste selon la revendication 1 dans lequel chaque ligne de secours (1) peut remplacer l'une quelconque des phases du jeu de barres (2) en fonctionnement dégradé du poste.

3. Poste selon la revendication 2 dans lequel chaque ligne de secours est hors tension en période de fonctionnement normal du poste.

4. Poste selon la revendication 3 dans lequel chaque ligne de secours comporte des éléments de connexion (13) chacun affecté à une phase du départ qu'il surplombe et pouvant chacun être raccordé à cette phase par un élément de liaison électrique (5).

5. Poste selon la revendication 4 dans lequel un élément de liaison électrique (5) d'une phase donnée est en période de fonctionnement normal du poste connecté à une traversée aérienne (4) reliée électriquement à la même phase du jeu de barres (2), et peut être déconnecté de ladite traversée aérienne en période de fonctionnement dégradé pour être raccordé à l'élément de connexion (13) affecté à cette phase.

6. Poste selon l'une des revendications 4 et 5 dans lequel le raccordement d'une phase d'une travée à l'élément de connexion qui lui est affecté est réalisé par un sectionneur à commande unipolaire supportant la ligne de secours sur laquelle est fixé ledit élément.

7. Poste selon l'une des revendications 1 à 6 dans lequel une seule ligne de secours est installée de chaque côté du jeu de barres.

8. Poste selon l'une des revendications 1 à 7 dans lequel au moins une ligne de secours est constituée de tronçons comprenant chacun une barre supportée par au moins un support isolateur (12).

9. Poste selon l'une des revendications 1 à 7 dans lequel au moins une ligne de secours est constituée de tronçons comprenant chacun un câble supporté par au moins une potence (14) fixée au portique (10) surplombant le jeu de barres.

10. Poste selon l'une des revendications 1 à 9 dans lequel un portique central (10) loge le jeu de barres (2) et sert d'arrêt de ligne pour des départs disposés opposés de part et d'autre dudit portique.

## Claims

1. A high-voltage substation comprising firstly equipment implemented using metal-clad technology and constituted by at least one single or double busbar set (2), and secondly equipment implemented using conventional air-insulated technology so as to form feeders disposed in bays (20) approximately perpendicular to said busbar set, said high-voltage substation being **characterized in that** it incorporates at least one air-insulaced backup line (1) approximately parallel to the busbar set and performing the function of backup phase to enable the substation to operate in "degraded" manner.

2. A substation according to claim 1, in which each backup line (1) may replace any one of the phases of the busbar set (2) while the substation is operating in degraded manner.

3. A substation according to claim 2, in which each backup line is de-energized while the substation is operating normally.

4. A substation according to claim 3, in which each backup line is provided with connection elements (13) each of which is assigned to a respective phase of the feeder that it overlies, and is suitable for being connected to its respective phase via an electrical link element (5).

5. A substation according to claim 4, in which, for normal operation of the substation, the electrical link element (5) of any given phase is connected to an overhead feedthrough (4) electrically connected to the same phase of the busbar set (2), and, for degraded operation, said electrical link can be disconnected from said overhead feedthrough so as to be connected to the connection element (13) assigned to said phase.

6. A substation according to claim 4 or 5, in which connecting a phase of a bay to the connection element that is assigned to it is performed by a selector switch disconnecter controlled in single-pole manner and supporting the backup line to which said element is fixed.

7. A substation according to any one of claims 1 to 6, in which a single backup line is installed on etcher side of the busbar set.

8. A substation according to any one of claims 1 to 7, in which at least one backup line is made up of segments, each of which comprises a busbar supported by at least one insulating support (12).

9. A substation according to any one of claims to 7, in which at least one backup line is made up of segments, each of which comprises a cable supported by at least one bracket (14) fixed to the gantry (10) overlying the busbar set.

10. A substation according to any one of claims 1 to 9, in which a central gantry (10) receives the busbar set (2) and serves as a line stop for the feeders disposed opposite one another on either side of said gantry.

## Patentansprüche

1. Hochspannungsstation mit metallgekapselten Einrichtungen, die aus zumindest einer einfachen oder doppelten Sammelschienenanordnung (2) bestehen, mit konventionell luftisolierten Einrichtungen, die zum Bilden von Abzweigen vorgesehen sind, die in annähernd senkrecht zu den Sammelschienenanordnungen verlaufenden Schaltfeldern (20) angeordnet sind, **dadurch gekennzeichnet, dass** sie zumindest eine luftisolierte Notleitung (1) umfasst, die annähernd parallel zur Sammelschienenanordnung verläuft und eine Notversorgungsfunktion für einen sogenannten Notbetrieb der Station gewährleistet.

2. Station nach Anspruch 1, wobei jede Notleitung (1) eine beliebige Phase der Sammelschienenanordnung (2) bei Notbetrieb der Station ersetzen kann.

3. Station nach Anspruch 2, wobei jede Notleitung für die Zeit des Normalbetriebs der Station spannungslos ist.

4. Station nach Anspruch 3, wobei jede Notleitung Verbindungselemente (13) enthält, die jeweils einer Phase des Abzweigs zugeordnet sind, den sie überspannen, und die jeweils über ein elektrisches Anschlusselement (5) an diese Phase angeschlossen werden können.

5. Station nach Anspruch 4, wobei ein elektrisches Anschlusselement (5) für eine gegebene Phase für die Zeit des Normalbetriebs der Station an eine Freiluftüberleitung (4) angeschlossen ist, die elektrisch mit der gleichen Phase der Sammelschienenanordnung (2) verbunden ist, und für die Zeit des Notbetriebs von der Freiluftüberleitung abgetrennt werden kann, um an das dieser Phase zugeordnete Verbindungselement (13) angeschlossen zu werden.

6. Station nach einem der Ansprüche 4 und 5, wobei der Anschluss einer Phase eines Schaltfeldes an ein diesem zugeordneten Verbindungselement über einen einpolig gesteuerten Trennschalter erfolgt, der die Notleitung trägt, an der dieses Element befestigt ist.

7. Station nach einem der Ansprüche 1 bis 6, wobei eine einzige Notleitung auf jeder Seite der Sammelschienenanordnung montiert ist.

8. Station nach einem der Ansprüche 1 bis 7, wobei zumindest eine Notleitung aus Abschnitten besteht, die jeweils eine Sammelschiene enthalten, die von zumindest einer Isolierstütze (12) getragen wird.

9. Station nach einem der Ansprüche 1 bis 7, wobei zumindest eine Notleitung aus Abschnitten besteht, die jeweils ein Seil enthalten, das von zumindest einem Ausleger (14) getragen wird, der am Portal (10) befestigt ist, das die Sammelschienenanordnung überspannt.

10. Station nach einem der Ansprüche 1 bis 9, wobei ein zentrales Portal (10) die Sammelschienenanordnung (2) aufnimmt und als Leitungssicherung für Abzweige dient, die beiderseits des Portals gegenüberliegend angeordnet sind.
